# EUROPEAN PATENT SPECIFICATION

(11) **EP 3 742 860 B1**
(45) Date of publication and mention of the grant of the patent: **03.05.2023**
(21) Application number: 20174928.0
(22) Date of filing: 15.05.2020
(51) Int. Cl.: H04W 74/08, H04W 36/02, H04W 36/00, H04W 36/18

(54) **RANDOM ACCESS RESPONSE-LESS MOBILITY ENHANCING SOLUTIONS**
AUF ZUFALLSZUGRIFF ANSPRECHENDE, DIE MOBILITÄT VERBESSERNDE LÖSUNGEN
SOLUTIONS AMÉLIORANT LA MOBILITÉ SANS RÉPONSE D'ACCÈS ALÉATOIRE

(30) Priority: 24.05.2019 US 201962852589 P
(43) Date of publication of application: 25.11.2020
(73) Proprietor: Nokia Technologies Oy, 02610 Espoo (FI)
(72) Inventor: Awada, Ahmad, 81249 Munich (DE); Viering, Ingo, 81549 Munich (DE); Stanczak, Jedrzej, 54107 Wroclaw (PL)
(74) Representative: Nokia EPO representatives

(56) References cited:
- NOKIA ET AL: "Handover Execution Enhancements for Simultaneously Connected UEs", 3GPP DRAFT; R2-1907265 HANDOVER EXECUTION ENHANCEMENTS FOR SIMULTANEOUSLY CONNECTED UES, 3RD GENERATION PARTNERSHIP PROJECT (3GPP), MOBILE COMPETENCE CENTRE ; 650, ROUTE DES LUCIOLES ; F-06921 SOPHIA- , vol. RAN WG2, no. Reno, USA; 20190513 - 20190517 13 May 2019 (2019-05-13), XP051730704, Retrieved from the Internet: URL:http://www.3gpp.org/ftp/Meetings%5F3GP P%5FSYNC/RAN2/Docs/R2%2D1907265%2Ezip [retrieved on 2019-05-13]
- NOKIA ET AL: "On mobility enhancements during cell change", 3GPP DRAFT; R1-1903138, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20190225 - 20190301 15 February 2019 (2019-02-15), XP051600834, Retrieved from the Internet: URL:http://www.3gpp.org/ftp/tsg%5Fran/WG1% 5FRL1/TSGR1%5F96/Docs/R1%2D1903138%2Ezip [retrieved on 2019-02-15]
- CMCC: "Consideration on Approaches to reduce Interruption Time during HO/SCG change", 3GPP DRAFT; R2-1901978 CONSIDERATION ON APPROACHES TO REDUCE INTERRUPTION TIME DURING HO SCG CHANGE, 3RD GENERATION PARTNERSHIP PROJECT (3GPP), MOBILE COMPETENCE CENTRE ; 650, ROUTE DES LUCIOLES ; F-0 , vol. RAN WG2, no. Athens, Greece; 20190225 - 20190301 15 February 2019 (2019-02-15), XP051603326, Retrieved from the Internet: URL:http://www.3gpp.org/ftp/tsg%5Fran/WG2% 5FRL2/TSGR2%5F105/Docs/R2%2D1901978%2Ezip [retrieved on 2019-02-15]

## Description

### CROSS-REFERENCE TO RELATED APPLICATIONS:

### FIELD:

Some example embodiments may generally relate to mobile or wireless telecommunication systems, such as Long Term Evolution (LTE) or fifth generation (5G) radio access technology or new radio (NR) access technology, or other communications systems. For example, certain embodiments may relate to apparatuses, systems, and/or methods for random access response-less (RAR-less) mobility enhancing solutions.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. Fifth generation (5G) wireless systems refer to the next generation (NG) of radio systems and network architecture. 5G is mostly built on a new radio (NR), but the 5G (or NG) network can also build on E-UTRAN radio. It is estimated that NR will provide bitrates on the order of 10-20 Gbit/s or higher, and will support at least enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. It is noted that, in 5G, the nodes that can provide radio access functionality to a user equipment (i.e., similar to Node B in UTRAN or eNB in LTE) are named gNB when built on NR radio and named NG-eNB when built on E-UTRAN radio. R2-1907265 "Handover Execution Enhancements for Simulating Connected UEs" by Nokia, Nokia Shanghai Bell; 3GPP TSG-RAN WG2 Meeting #106, Reno 13th-17th May, 2019, is a technical contribution that proposes enhancements to the random access procedure in dual connectivity and non-dual connectivity based handovers.

### SUMMARY:

The scope of the invention is defined by the appended claims.

In accordance with other example non-claimed embodiments, a non-transitory computer readable medium may be encoded with instructions that may, when executed in hardware, perform a method. The method may include exchanging packet data with a source base station. The method may also include exchanging packet data with a source base station. The method may also include receiving, from the source base station, a command to send a preamble message to a target base station and to listen for a random access response from the source base station. The method may further include continuing to exchange packet data with the source base station while listening for the random access response. In addition, the method may include after receiving the command, temporarily detaching from the source base station and synchronizing with a target base station. Further, the method may include sending the preamble message to the target base station according to a coordinated time occasion. The method may also include resuming packet data exchange with the source base station immediately after sending the preamble message.

Other example non-claimed embodiments may be directed to a computer program product that performs a method. The method may include exchanging packet data with a source base station. The method may also include exchanging packet data with a source base station. The method may also include receiving, from the source base station, a command to send a preamble message to a target base station and to listen for a random access response from the source base station. The method may further include continuing to exchange packet data with the source base station while listening for the random access response. In addition, the method may include after receiving the command, temporarily detaching from the source base station and synchronizing with a target base station. Further, the method may include sending the preamble message to the target base station according to a coordinated time occasion. The method may also include resuming packet data exchange with the source base station immediately after sending the preamble message.

Other example embodiments may be directed to an apparatus that may include circuitry configured to exchange packet data with a source base station. The apparatus may also include circuitry configured to receive, from the source base station, a command to send a preamble message to a target base station and to listen for a random access response from the source base station. The apparatus may further include circuitry configured to continue to exchange packet data with the source base station while listening for the random access response. In addition, the apparatus may include circuitry configured to, after receiving the command, temporarily detach from the source base station and synchronizing with a target base station. Further, the apparatus may include circuitry configured to send the preamble message to the target base station according to a coordinated time occasion. The apparatus may also include circuitry configured to resume packet data exchange with the source base station immediately after sending the preamble message.

In accordance with other non-claimed example embodiments, a non-transitory computer readable medium may be encoded with instructions that may, when executed in hardware, perform a method. The method may include exchanging packet data with a user equipment. The method may also include sending the user equipment, a command for the user equipment to send a preamble message to a target base station and to listen for a random access response from a source base station's radio interface. The method may further include continuing to exchange packet data with the user equipment while the user equipment listens for the random access response. In addition, the method may include resuming packet data exchange with the user equipment immediately after the preamble message is sent.

Other example non-claimed embodiments may be directed to a computer program product that performs a method. The method may include exchanging packet data with a user equipment. The method may also include sending the user equipment, a command for the user equipment to send a preamble message to a target base station and to listen for a random access response from a source base station's radio interface. The method may further include continuing to exchange packet data with the user equipment while the user equipment listens for the random access response. In addition, the method may include resuming packet data exchange with the user equipment immediately after the preamble message is sent.

### BRIEF DESCRIPTION OF THE DRAWINGS:

For proper understanding of example embodiments, reference should be made to the accompanying drawings, wherein:
FIG. 1 illustrates an example user equipment handover procedure.
FIG. 2 illustrates an example user equipment handover (HO) procedure where completion of random access channel (RACH) access to the target cell occurs before executing the HO and detaching from the source cell.
FIG. 3 illustrates an example of an enhanced RACH access for a multi-connected UE.
FIG. 4 illustrates an HO procedure when the UE completes the HO execution upon receiving the RAR from the source cell, according to an example embodiment.
FIG. 5 illustrates an HO procedure of a retransmission of Msg1 to the target cell when not receiving RAR from the source cell within a certain time window, according to an example embodiment.
FIG. 6 illustrates an HO procedure of a case when the UE sends RRC (connection) reconfiguration complete to the target BS upon receiving an HO resume signaling from the source BS, according to an example non-claimed embodiment.
FIG. 7 illustrates a flow diagram of a method, according to an example embodiment.
FIG. 8 illustrates a flow diagram of another method, according to an example embodiment.
FIG. 9(a) illustrates an example block diagram of an apparatus, according to an embodiment.
FIG. 9(b) illustrates an example block diagram of another apparatus, according to an example embodiment.
FIG. 10 illustrates a table of components of intra-frequency HO interruption in NR FR1.

### DETAILED DESCRIPTION:

It will be readily understood that the components of certain example embodiments, as generally described and illustrated in the figures herein, may be arranged and designed in a wide variety of different configurations. The, the following detailed description of some example embodiments of systems, methods, apparatuses, and computer program products may be for random access response less (RAR-less) mobility enhancing solutions to reduce interruption time. This is not intended to limit the scope of certain example embodiments, but is representative of some example embodiments.

The features, structures, or characteristics of example embodiments described throughout this specification may be combined in any suitable manner in one or more example embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily all refer to the same group of embodiments, and the described features, structures, or characteristics may be combined in any suitable manner in one or more example embodiments.

As such, the following description should be considered as merely illustrative of the principles and teachings of certain example embodiments, and not in limitation thereof.

5G is expected to have multiple radio interfaces, namely below 6GHz, cmWave and mmWave, and also being integrated with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local breakout and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), and critical communications (autonomous vehicles, traffic safety, real-time analytics, time-critical control, healthcare applications).

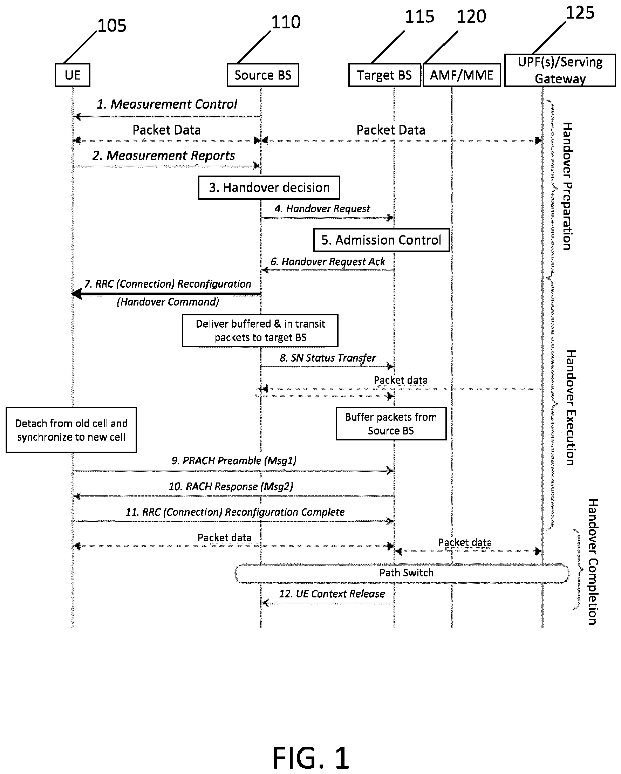

FIG. 1 illustrates an example user equipment (UE) handover (HO) procedure. In particular, FIG. 1 provides a high-level description of the HO procedure in NR/LTE systems. The HO procedure may begin at step 1 where source BS 110 may send a measurement control message to UE 105. After receiving the measurement control message at UE 105, packet data may be exchanged between UE 105 and source BS 110, and between source BS 110 and user plane function(s) (UPF)/serving gateway 125. At step 2, UE 105 may send measurement reports to source BS 110, and at step 3, source BS 110 may perform an HO decision. At step 4, source BS 110 may send an HO request to target BS 115, and at step 5, target BS 115 may perform an admission control procedure. Following the admission control procedure, target BS 115 may, at step 6, send an HO request acknowledgment to source BS 105. As illustrated in FIG. 1, steps 1-6 may take place during an HO preparation stage of the HO procedure.

In response to receiving the HO request acknowledgment, source BS 110 may send a radio resource control (RRC) (connection) reconfiguration message (HO command) to UE 105 at step 7. Upon receiving the HO command in step 7, UE 105 may detach from source BS 110 and start to synchronize to target BS 115. After sending the RRC (connection) reconfiguration to UE 105, source BS 110 may deliver buffered and in transit packets to target BS 115. At step 8, source BS 110 may send a sequence number (SN) status transfer message to target BS 115. After sending the SN status transfer message, packet data may be exchanged between UPF(s)/serving gateway 125 and target BS 115 via source BS 110. In addition, UE 105 may detach from source BS 110 and synchronize with target BS 115. In addition, target BS 115 may buffer packets from source BS 110.

At step 9, the random access procedure may be initiated. The initiation may be done by sending a physical random access channel (PRACH) preamble (Msg1) to target BS 115. At step 10, target BS 115 may send a random access channel (RACH) response (Msg2) to UE 105, and in step 11, UE 105 may send an RRC (connection) reconfiguration complete message to target BS 115, which completes the HO execution. After step 11, packet data may be exchanged between UE 105 and target BS 115, and between target BS 115 and UPF(s)/serving gateway 125. As illustrated in FIG. 1, a mobility interruption time, defined by the time in which the UE does not exchange any user data with the network, may start from the reception of the HO command in step 7 until the transmission of RRC (connection) reconfiguration complete in step 11. Packet data may then be exchanged between UE 105 and target BS 115, and between target BS 115 and UPF(s)/serving gateway 125. Subsequently, path switch may be performed between source BS 110, target BS 115, access management function/mobility management entity (AMF/MME) 120, and UPF(s)/serving gateway. In addition, at step 12, target BS 115 may send a UE context release message to source BS 110. As illustrated in FIG. 1, steps 7-11 correspond to HO execution procedures, and the path switch and step 12 correspond to HO completion.

The 3^{rd} Generation Partnership Project (3GPP) Release 14 describes a make-before-break (MBB) solution of LTE. For example, the UE in the MBB solution may continue, after receiving the HO command, to exchange user packets with the source BS until it starts to synchronize to the new target cell, and sends PRACH preamble (Msg1). This solution may reduce the mobility interruption time by RRC procedure delay, which accounts for the decoding time of HO command and reconfiguration of L1/L2 radio protocols.

A RACH-less HO has also been described. In a RACH-less HO, the UE may skip the transmission of the first two RA messages Msg1 and Msg2, illustrated in steps 9 and 10, respectively, in FIG. 1. The UE may also send the RRC (connection) reconfiguration complete to the target BS after receiving the HO command. As a result, the mobility interruption time may be reduced by time needed to send Msg1 and receive Msg2.

However, RACH-less HO is possible only when the timing advance (TA) to be used for sending RRC (connection) reconfiguration complete on physical uplink shared channel (PUSCH) is known, and configured by the target BS using the HO command. As described herein, TA may be either set to zero (in case the target cell is a small cell) or equal to that of the source cell (source and target cells may be co-located).

Solutions described in NR and LTE mobility work items may include split bearer / non-split bearer solutions. Most solutions currently discussed in the NR and LTE mobility work items make use of two simultaneously active protocol stacks, either in a split-bearer fashion or in a non-split bearer fashion. These typically require two TX/RX (transceiver/receiver). Alternatively, in time division duplex (TDD) solutions, the UE may switch a single TX/RX to one or the other link while having the simultaneous protocol stacks. Those methods may require large levels of coordination between the two links.

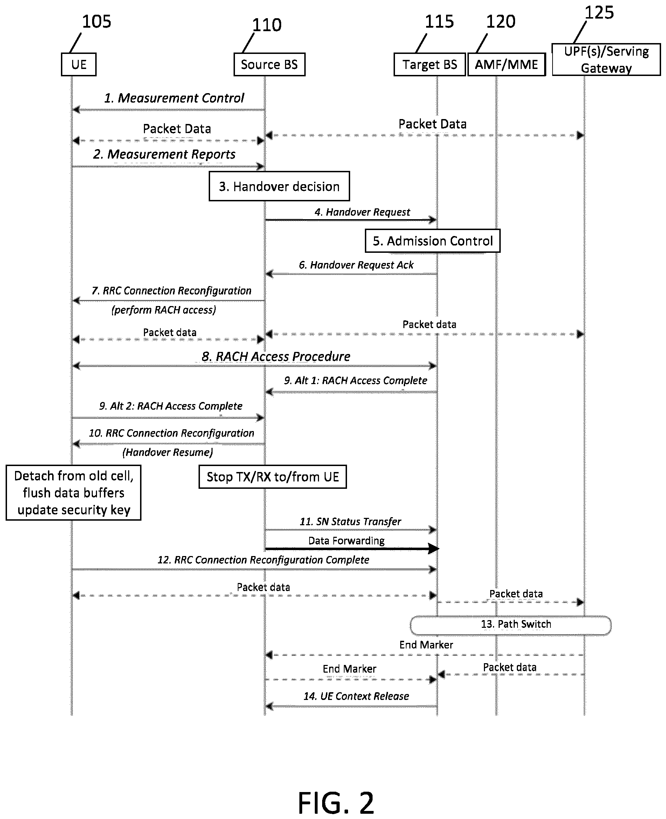

Another solution may include reducing HO interruption with two transmitters and receivers, and a single active protocol stack. In this regard, FIG. 2 illustrates an example UE HO procedure where completion of RACH access to the target cell occurs before executing the HO and detaching from the source cell. In order to reduce complexity of simultaneously active protocol stacks, simplified solutions with a single active protocol stack has been discussed. An exemplary implementation of the solution is illustrated in FIG. 2. Steps 1-6 in FIG. 2 are the same as steps 1-6 in FIG. 1 described above. At step 7, an RRC connection reconfiguration (perform RACH access) message may be sent from source BS 110 to UE 105. After the RRC connection reconfiguration message is sent, packet data may be exchanged between UE 105 and source BS 110, and between source BS 110 and serving gateway/UPF 125. At step 8, a RACH access procedure may be performed between UE 105 and target BS 115. That is, the UE completes RACH access to target cell in step 8 while exchanging user packets with the source cell. Upon completing the RA, in step 9, UE 105 may receive an HO resume command in step 10 from source BS 110 to execute the HO by detaching from source BS 110. After detachment, source BS 110 may stop TX/RX to/from UE 105, and at step 11, sends an SN status transfer message to target BS 115 along with data forwarding.

At step 12, UE 105 may send RRC connection reconfiguration complete message to target BS 115, after which packet data exchange continues between UE 105 and target BS 11, and from target BS 115 to serving gateway/UPF 125. A path switch procedure may then be performed at step 13, after which the serving gateway/UPF 125 may send an end marker to source BS 110. Source BS 110 may then send an end marker to target BS 115, and target BS 115 may receive packet data from serving gateway/UPF 125. Finally, at step 14, target BS 115 may send source BS 110 a UE context release message, which completes the procedure. In the solution illustrated in FIG. 2, the RA procedure (sending Msg1 and receiving Msg2) may be performed while receiving and transmitting data to the source cell. As such, it does not lead to mobility interruption time.

A further solution relates to a UE with a single TX/RX. This concept of a single active protocol stack was previously described, and could in principle work with a single TX/RX. For example, in this solution for category 3 (enhanced MBB single active protocol stack at the UE side (eMBB-SI-ACT)), only RACH procedure to the target will be processed in parallel with the data transmission/reception in source. Further, the concurrent time will be quite short. Thus, in the case of a UE with a single TX/RX only or, for the scenarios where simultaneous transmission/reception would be required, the UE may simply skip the data transmission/reception with the source cell to prioritize the RACH procedure. For example, the UE may skip data transmission to the source cell when colliding with Msg1/Msg3 transmission to the target, without the need of introducing TDM solutions.

Thus, according to [0029] it has been proposed and discussed that the UE with one TRX (transceiver) may skip the transmission/reception with the source cell when they collide with the Msg1/Msg3 transmission to the target cell. However, in this solution, a UE with 1 TRX still needs to monitor the RAR window for receiving Msg2 from the target BS. As such, the UE would have to detach from the source cell when sending Msg 1 until receiving at least Msg2 from the target BS, which does not help in reducing the mobility interruption time. Furthermore, if retransmissions of Msg 1 were needed, there would be considerable additional interruption since the UE cannot exchange data with the source cell while retransmitting (as UE reattempts Msg1).

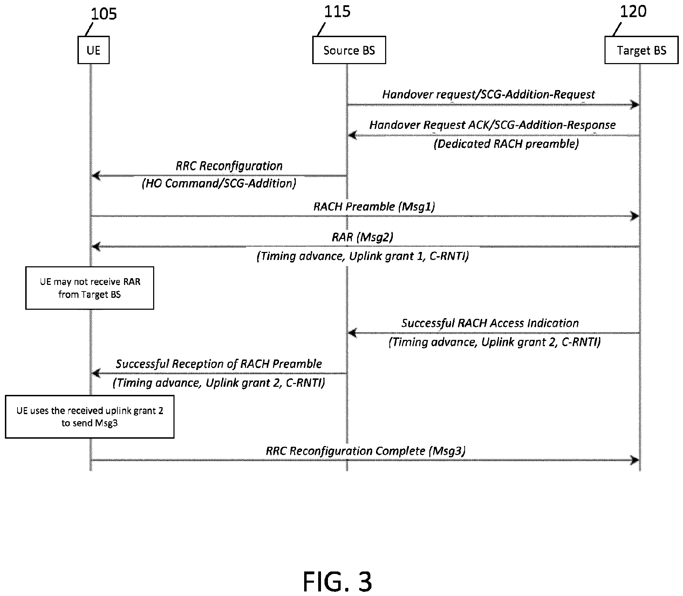

FIG. 3 illustrates an example of an enhanced RACH access for a multi-connected UE. FIG. 3 relates to a further solution with enhanced RACH access for a multi-connected UE. As illustrated in FIG. 3, this solution proposes enhancements to increase the robustness of the RAR reception by a UE equipped with two TRXs. This solution also proposes enhancements to increase the robustness of the RAR reception by performing RACH access to the target BS while being connected and while exchanging user data with another source BS.

As further illustrated in FIG. 3, the target BS sends RAR using 1) the direct radio link established with the UE, and 2) the radio link established with the source cell by forwarding the RAR. As such, the UE may either receive the RAR from the source or target cell which provides diversity increasing the likelihood of successfully receiving the RAR. It is also noted that in this solution, the transmission of RAR is duplicated on the direct radio link with the UE and radio link established between the source cell and UE. Further, the UE has to simultaneously monitor the RAR from both source and target cells. This is only possible if the UE is equipped with two TRXs.

Certain example embodiments may relate to a mobility enhancement for a UE with one TRX in LTE or NR networks. For example, certain embodiments may address how to reduce the mobility interruption time for a UE with one TRX in typical scenarios where the TA is not necessarily zero or equal that of the source cell.

According to claimed embodiments, it may be possible to reduce the mobility interruption time for a UE equipped with one TRX in scenarios where RACH-less HO is not possible. For example, after sending a measurement report triggering HO preparation, the UE may receive from the source cell, a command to send only PRACH preamble (Msg1) to the target cell and to listen for RAR (Msg2) from the source cell. Upon receiving the command, the UE may continue to exchange user data with the source cell in both uplink (UL) and downlink (DL).

In an embodiment, the UE does not need to monitor the RAR from the target BS after sending Msg1. Further, the time occasion(s) for sending Msg1 are coordinated between the UE and the source cell. This may be accomplished via two options.

As a first option, the source cell may be informed by the target cell about the RACH occasions that the UE may use to send the PRACH preamble. Using this information, the source cell may skip scheduling the UE for DL/UL in at least one of the indicated RACH occasions. As a second option, the UE may inform the source cell explicitly before sending Msg1 such that it can skip scheduling the UE for DL/LJL in the next upcoming RACH occasion.

According to an example embodiment, for sending Msg1, the UE may temporarily detach from the source cell and synchronize to the target cell. When the UE sends Msg1, it may skip any UL transmission to the source cell, including PUSCH and physical uplink control channel (PUCCH). In this scenario, the network may have taken into account the indicated RACH occasion and refrained from configuring the grant for UL for that time instance.

In the claimed embodiments, immediately after sending Msg1, the UE does resume its connection/exchange of user data packets with the source cell in both UL and DL. Further, upon successfully receiving the PRACH preamble, the target cell sends the RAR to the UE using only the radio link of the source cell (instead of the direct Uu link from the target cell). In another non-claimed embodiment, upon receiving the RAR from the source cell, the UE may detach from the source cell and execute the HO to the target cell by sending an RRC (connection) reconfiguration complete message. Alternatively, in another non-claimed embodiment, the UE may wait for a new command from the source cell, such as "handover resume" to be sent after the RAR for executing the HO. This may be useful in case the decoding of the RAR takes some time. Herein, the UE may continue to exchange user data with the source cell while decoding RAR. If no RAR is received from the source cell, the UE may send Msg1 again, but does not need to synchronize again.

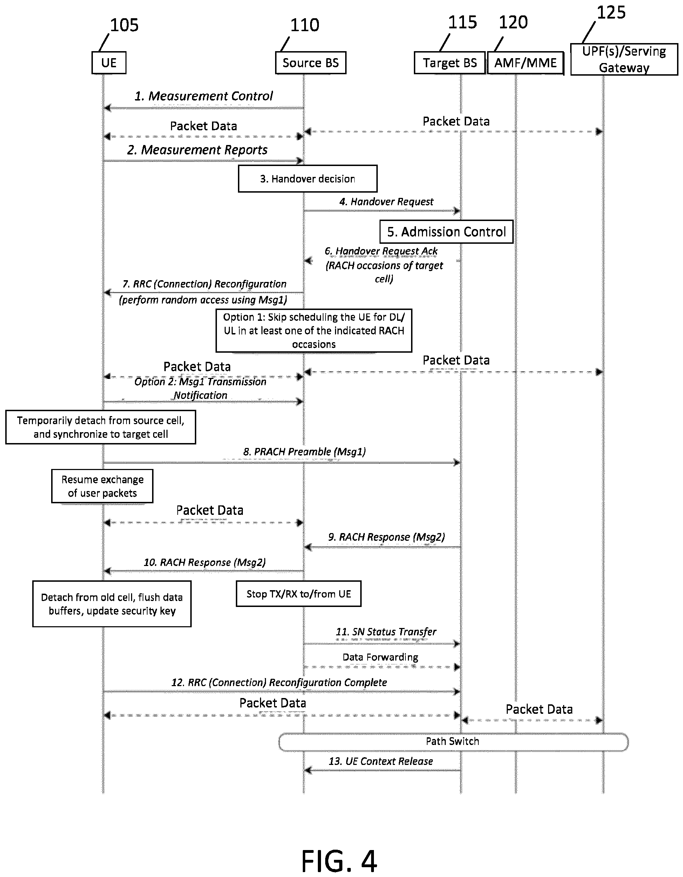

FIG. 4 illustrates an HO procedure when the UE completes the HO execution upon receiving the RAR from the source cell, according to an embodiment. As illustrated in FIG. 4, steps 1-5 are similar to steps 1-5 described above with respect to FIGs. 1 and 2. Further, upon receiving the measurement report in step 2, source BS 110 may decide to trigger the HO and send to target BS 115 an HO request message in step 4. In a non-claimed embodiment, the HO request message may contain an indication for RAR-less HO such that the target cell behaves by sending RAR via the source cell, and by preparing an HO command for the UE containing RAR-less HO indication.

At step 6 in FIG. 4, target BS 115 may send an HO request acknowledgement (including RACH occasions of target cell) to source BS 110. At step 7, source BS 110 may send an RRC (connection) reconfiguration message to UE 105 to perform random access using Msg1. As previously noted, in the response to the HO request, target BS 115 may at step 6 inform source BS 110 about the RACH occasions that UE 105 will be using to send Msg1. In option 1, source BS 110 may skip scheduling the UE in all the RACH occasions. Alternatively, source BS 110 may inform UE 105 in RRC (connection) reconfiguration, step 7, about the RACH occasions that the UE shall use to send Msg1 (ones that source BS 110 will skip scheduling the UE). After receiving RRC (Connection) Reconfiguration from the source BS in Step 7, UE 105 may temporarily detach from source BS 110, and synchronize to target cell 115.

In option 2, UE 105 may inform source BS 110 before sending Msg1 such that source BS 110 skips scheduling the UE in the upcoming RACH occasion. By doing so, it may be possible for source BS 110 to skip scheduling only on the RACH occasion that is indicated by UE 105. According to another example embodiment, UE 105 may inform source BS 110 about the RACH occasions that it may consider for sending Msg1. This indication may be performed on PUCCH, medium access control (MAC) control element (CE), or RRC signaling. According to a further example embodiment, there may be an option 3 without any coordination. For example, the UE may autonomously ignore UL grants and PUCCH transmissions from/to source BS when transmitting the preamble to the target cell. After receiving RRC (Connection) Reconfiguration from the source BS in Step 7, UE 105 may temporarily detach from source BS 110, and synchronize to target cell 115. As illustrated in FIG. 4, while synchronized to target BS 115, UE 105 may at step 8, send PRACH preamble (Msg1) to target BS 115.

As further illustrated in FIG. 4, upon receiving the RACH preamble from UE 105 (step 8), target BS 115 sends the RAR to UE 105 via the radio link of source BS 110 only. That is, target BS 115 does not transmit the RAR over its direct radio link with UE 105 since UE 105 returns to exchange user packets with source BS 110 after sending Msg1. In an example embodiment, the UL grant provided by target cell 115 in RAR may be semi-persistent allocation such that UE 105 may use any of the available slots to send RRC (connection) reconfiguration complete to target BS 115.

After resuming exchange of user packets, at step 9, target BS 115 sends a RACH response (Msg2) to source BS 110. Source BS 110 sends then, at step 10, the RACH response (Msg2) to UE 105, after which UE 105 may detach from source BS 110, flushes data buffers, and updates security keys. At this point, source BS 110 stops TX/RX signaling to/from UE 105, and at step 11, sends an SN status transfer message to target BS 115 (along with data forwarding).

Once UE 105 receives the RA response from source BS 110, UE 105 may detach and send RRC (connection) reconfiguration complete to target BS 115, which completes the HO execution (step 12). After completion, packet data may be exchanged between UE 105 and target BS 115, as well as between target BS 115 and UPF(s)/serving gateway 125. In addition, a path switch procedure may be performed between source BS 110, target BS 115, AMF/MME 120, and UPF(s)/serving gateway 125. Finally, at step 13, target BS 115 may send UE context release message to source BS 110.

According to a non-claimed embodiment, target BS 115 may indicate to UE 105 the RACH occasions in which UE 105 and target BS 115 will execute the HO according to the proposed RAR-less HO (target cell may send RAR via the radio link of source cell). For the subsequent RACH occasions, UE 105 and target BS 115 may perform the legacy RACH access where target BS 115 sends the RAR over the direct radio link and UE 105 would monitor target BS 115 for receiving the RAR.

In an alternative non-claimed embodiment, target cell 115 may indicate to UE 105 the time period in which UE 105 and target BS 115 will execute the HO according to the proposed RAR-less HO. After this time period expires, UE 105 and target BS 115 may send the RAR over the direct radio link and UE 105 may monitor target BS 115 for receiving the RAR.

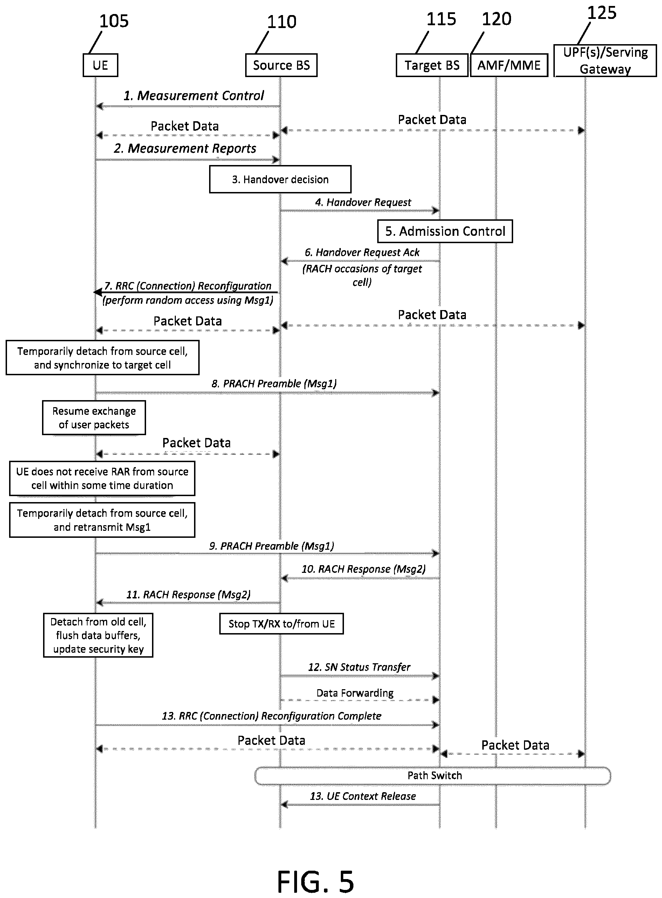

FIG. 5 illustrates an HO procedure of a retransmission of Msg1 to the target cell when not receiving RAR from the source cell within a certain time window, according to an example embodiment. According to an example embodiment, the certain time window may be a predefined time window. As illustrated in FIG. 5, the steps illustrated therein are similar to those of FIG. 4 previously described herein. However, in the case of FIG. 5, when UE 105 does not receive an RAR for Msg1 from source BS 110 within a predefined time window, UE 105 may temporarily detach from source BS 110 and retransmit Msg1 to target BS 115 in step 9.

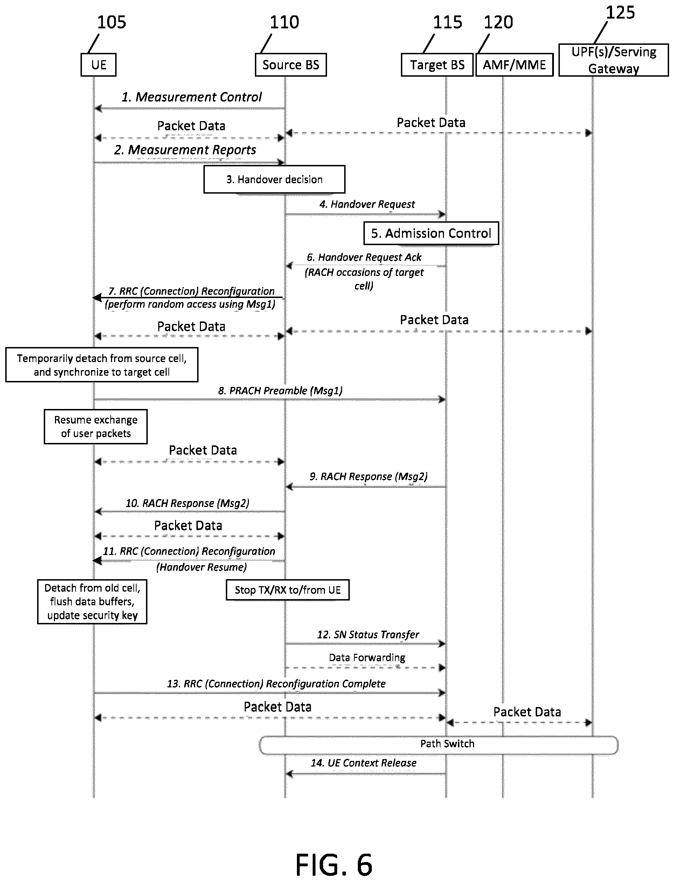

FIG. 6 illustrates an HO procedure of a case when the UE sends RRC (connection) reconfiguration complete to the target BS upon receiving an HO resume signaling from the source BS, according to an example embodiment. As illustrated in FIG. 6, the steps illustrated therein are similar to those of FIG. 4 previously described herein. However, FIG. 6 illustrates a case when UE 105 sends RRC (connection) reconfiguration complete to target BS 115 (completing the HO execution) upon receiving an HO resume message at step 11 from source BS 110. According to an example embodiment, UE 105 may continue to exchange user data with source BS 110 until it receives the HO resume message from source BS 110. This may have the additional advantage that the time the UE needs to decode the RAR will not contribute to the interruption, which may further reduce the interruption time by several milliseconds.

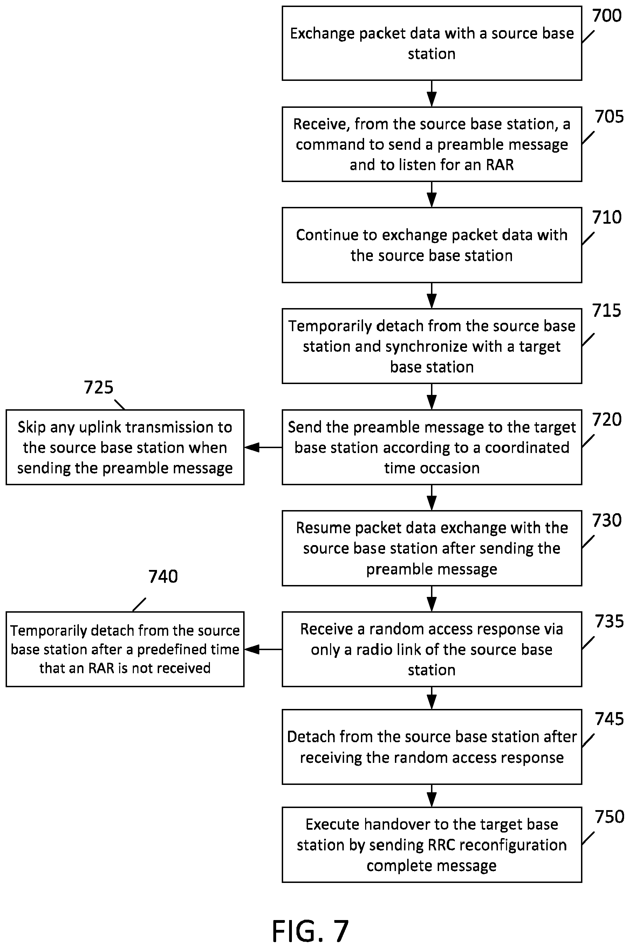

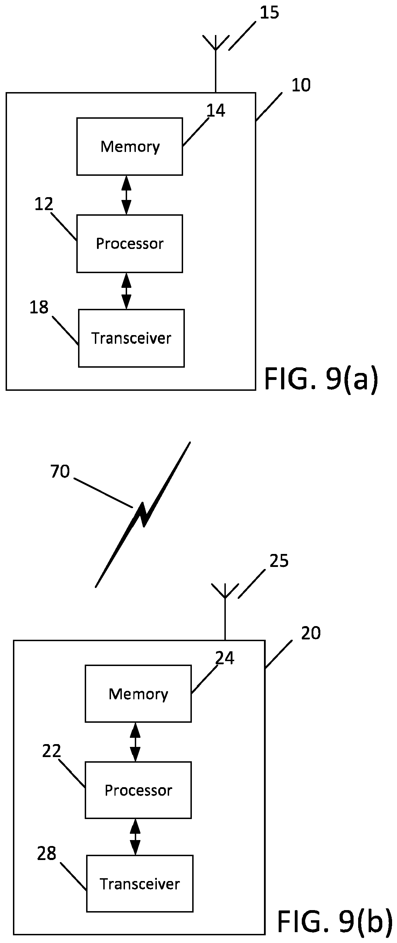

FIG. 7 illustrates a flow diagram of a method, according to an embodiment. In an example embodiment, the flow diagram of FIG. 7 may be performed by a mobile station and/or UE, for instance similar to apparatus 10 illustrated in FIG. 9(a). According to an example embodiment, the method of FIG. 7 may include initially, at 700, exchanging packet data with a source base station. The method also includes at 705, receiving, from the source base station, a command to send a preamble message to a target base station and to listen for a random access response from the source base station. The method further includes at 710, continuing to exchange packet data with the source base station while listening for the random access response. At 715, after receiving the command, temporarily detaching from the source base station and synchronizing with a target base station.

The method includes, at 720, sending the preamble message to the target base station according to a coordinated time occasion. At 725, the method includes skipping any uplink transmission to the source base station when sending the preamble. Further, at 730, the method includes resuming packet data exchange with the source base station immediately after sending the preamble message.

At 735, the method includes receiving a random access response via only a radio link of the source base station. In an example embodiment, the method may include at 740, temporarily detaching from the source base station after a predefined time that a random access response is not received from the source base station. At 745, the method may include detaching from the source base station after receiving the random access response, and at 750, executing handover to the target base station by sending a radio resource control reconfiguration complete message to the target base station.

According to an example embodiment, the radio resource control reconfiguration complete message may be sent to the target base station after receiving a handover resume message from the source base station. In another example embodiment, the data packet exchange may continue with the source base station until the handover resume message is received. According to a further example embodiment, the timing occasion may be when a user equipment is not scheduled for downlink or uplink in at least one random access channel occasion. In another example embodiment, the timing occasion may be when a user equipment is not scheduled for downlink or uplink in a next upcoming random access channel occasion.

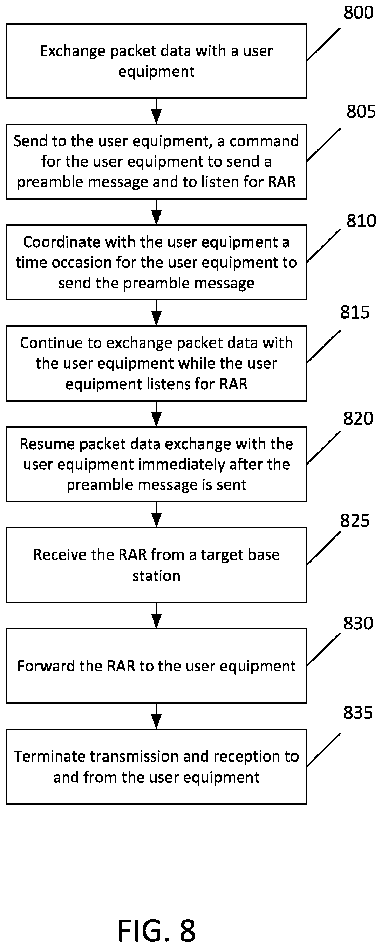

FIG. 8 illustrates a flow diagram of another method, according to an example embodiment. In an example embodiment, the method of FIG. 8 may be performed by a network entity or network node in a 3GPP system, such as LTE or 5G-NR. For instance, in an example embodiment, the method of FIG. 8 may be performed by a base station, eNB, or gNB, for instance similar to apparatus 20 illustrated in FIG. 9(b).

According to an example embodiment, the method of FIG. 8 may include initially, at 800, exchanging packet data with a user equipment. The method includes, at 805, sending the user equipment, a command for the user equipment to send a preamble message to a target base station and to listen for a random access response from the source cell's radio interface (Uu). The method further includes, at 810, coordinating with the user equipment a time occasion for the user equipment to send the preamble message. At 815, the method includes continuing to exchange packet data with the user equipment while the user equipment listens for the random access response. Further, at 820, the method includes resuming packet data exchange with the user equipment immediately after the preamble message is sent.

The method may also include, at 825, receiving the random access response from a target base station as a result of the user equipment sending the preamble message. In addition, at 830, the method may include forwarding the random access response to the user equipment via a radio link of a source base station. At 835, the method may include terminating transmission and reception to and from the user equipment after forwarding the random access response.

In an example embodiment, the timing occasion may include receiving information from a target cell about random access channel occasions that the user equipment may use to send the preamble message. In another example embodiment, the timing occasion may include receiving information from the user equipment before the user equipment sends the preamble message to skip scheduling the user equipment for uplink or downlink in a next upcoming random access channel occasion.

FIG. 9(a) illustrates an example apparatus 10 according to an example embodiment. In an embodiment, apparatus 10 may be a node or element in a communications network or associated with such a network, such as a UE, mobile equipment (ME), mobile station, mobile device, stationary device, IoT device, or other device. As described herein, UE may alternatively be referred to as, for example, a mobile station, mobile equipment, mobile unit, mobile device, user device, subscriber station, wireless terminal, tablet, smart phone, IoT device, sensor or NB-IoT device, or the like. As one example, apparatus 10 may be implemented in, for instance, a wireless handheld device, a wireless plug-in accessory, or the like.

In some example embodiments, apparatus 10 may include one or more processors, one or more computer-readable storage medium (for example, memory, storage, or the like), one or more radio access components (for example, a modem, a transceiver, or the like), and/or a user interface. In some embodiments, apparatus 10 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 10 may include components or features not shown in FIG. 9(a).

As illustrated in the example of FIG. 9(a), apparatus 10 may include or be coupled to a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples.

While a single processor 12 is shown in FIG. 9(a), multiple processors may be utilized according to other embodiments. For example, it should be understood that, in certain example embodiments, apparatus 10 may include two or more processors that may form a multiprocessor system (e.g., in this case processor 12 may represent a multiprocessor) that may support multiprocessing. According to certain example embodiments, the multiprocessor system may be tightly coupled or loosely coupled (e.g., to form a computer cluster).

Processor 12 may perform functions associated with the operation of apparatus 10 including, as some examples, precoding of antenna gain/phase parameters, encoding and decoding of individual bits forming a communication message, formatting of information, and overall control of the apparatus 10, including processes related to management of communication resources.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some embodiments, apparatus 10 may also include or be coupled to one or more antennas 18 for receiving a downlink signal and for transmitting via an uplink from apparatus 10. Apparatus 10 may further include a transceiver 18 configured to transmit and receive information. The transceiver 18 may also include a radio interface (e.g., a modem) coupled to the antenna 15. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 18 may be configured to modulate information on to a carrier waveform for transmission by the antenna(s) 15 and demodulate information received via the antenna(s) 15 for further processing by other elements of apparatus 10. In other embodiments, transceiver 18 may be capable of transmitting and receiving signals or data directly. Additionally or alternatively, in some embodiments, apparatus 10 may include an input and/or output device (I/O device). In certain embodiments, apparatus 10 may further include a user interface, such as a graphical user interface or touchscreen.

In an embodiment, memory 14 stores software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software. According to an example embodiment, apparatus 10 may optionally be configured to communicate with apparatus 20 via a wireless or wired communications link 70 according to any radio access technology, such as NR.

According to certain example embodiments, processor 12 and memory 14 may be included in or may form a part of processing circuitry or control circuitry. In addition, in some embodiments, transceiver 18 may be included in or may form a part of transceiving circuitry.

As discussed above, according to certain example embodiments, apparatus 10 may be a UE, mobile device, mobile station, ME, IoT device and/or NB-IoT device, for example. According to certain embodiments, apparatus 10 may be controlled by memory 14 and processor 12 to perform the functions associated with example embodiments described herein. For example, in some embodiments, apparatus 10 may be configured to perform one or more of the processes depicted in any of the flow charts or signaling diagrams described herein, such as the flow diagrams illustrated in FIGs. 1-7.

For instance, in one embodiment, apparatus 10 may be controlled by memory 14 and processor 12 to exchange packet data with a source base station. Apparatus 10 may also be controlled by memory 14 and processor 12 to receiving, from the source base station, a command to send a preamble message to a target base station and to listen for a random access response from the source base station. Apparatus 10 may further be controlled by memory 14 and processor 12 to continue to exchange packet data with the source base station while listening for the random access response, and after receiving the command, temporarily detach from the source base station and synchronize with a target base station. Apparatus 10 may also be controlled by memory 14 and processor 12 to send the preamble message to the target base station according to a coordinated time occasion, and skip any uplink transmission to the source base station when sending the preamble message.

Apparatus 10 may further be controlled by memory 14 and processor 12 to resume packet data exchange with the source base station immediately after sending the preamble message, and receive a random access response via only a radio link of the source base station. Apparatus 10 may also be controlled by memory 14 and processor 12 to temporarily detach from the source base station after a predefined time that a random access response is not received from the source base station. Apparatus 10 may further be controlled by memory 14 and processor 12 to detach from the source base station after receiving the random access response, and execute handover to the target base station by sending a radio resource control reconfiguration complete message to the target base station.

FIG. 9(b) illustrates an example of an apparatus 20 according to an example embodiment. In an example embodiment, apparatus 20 may be a node, host, or server in a communication network or serving such a network. For example, apparatus 20 may be a satellite, base station, a Node B, an evolved Node B (eNB), 5G Node B or access point, next generation Node B (NG-NB or gNB), and/or WLAN access point, associated with a radio access network (RAN), such as an LTE network, 5G or NR. In certain example embodiments, apparatus 20 may be an eNB in LTE or gNB in 5G.

It should be understood that, in some example embodiments, apparatus 20 may be comprised of an edge cloud server as a distributed computing system where the server and the radio node may be stand-alone apparatuses communicating with each other via a radio path or via a wired connection, or they may be located in a same entity communicating via a wired connection. For instance, in certain example embodiments where apparatus 20 represents a gNB, it may be configured in a central unit (CU) and distributed unit (DU) architecture that divides the gNB functionality. In such an architecture, the CU may be a logical node that includes gNB functions such as transfer of user data, mobility control, radio access network sharing, positioning, and/or session management, etc. The CU may control the operation of DU(s) over a front-haul interface. The DU may be a logical node that includes a subset of the gNB functions, depending on the functional split option. It should be noted that one of ordinary skill in the art would understand that apparatus 20 may include components or features not shown in FIG. 9(b).

As illustrated in the example of FIG. 9(b), apparatus 20 may include a processor 22 for processing information and executing instructions or operations. Processor 22 may be any type of general or specific purpose processor. For example, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in FIG. 9(b), multiple processors may be utilized according to other embodiments. For example, it should be understood that, in certain embodiments, apparatus 20 may include two or more processors that may form a multiprocessor system (e.g., in this case processor 22 may represent a multiprocessor) that may support multiprocessing. In certain embodiments, the multiprocessor system may be tightly coupled or loosely coupled (e.g., to form a computer cluster).

According to certain example embodiments, processor 22 may perform functions associated with the operation of apparatus 20, which may include, for example, precoding of antenna gain/phase parameters, encoding and decoding of individual bits forming a communication message, formatting of information, and overall control of the apparatus 20, including processes related to management of communication resources.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20.

In certain example embodiments, apparatus 20 may also include or be coupled to one or more antennas 25 for receiving signals and/or data and for transmitting signals and/or data from apparatus 20. Apparatus 20 may further include or be coupled to a transceiver 28 configured to transmit and receive information. The transceiver 28 may include, for example, a plurality of radio interfaces that may be coupled to the antenna(s) 25. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an uplink).

As such, transceiver 28 may be configured to modulate information on to a carrier waveform for transmission by the antenna(s) 25 and demodulate information received via the antenna(s) 25 for further processing by other elements of apparatus 20. In other embodiments, transceiver 28 may be capable of transmitting and receiving signals or data directly. Additionally or alternatively, in some embodiments, apparatus 20 may include an input and/or output device (I/O device).

In an embodiment, memory 24 may store software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software.

According to some embodiments, processor 22 and memory 24 may be included in or may form a part of processing circuitry or control circuitry. In addition, in some embodiments, transceiver 28 may be included in or may form a part of transceiving circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to case an apparatus (e.g., apparatus 20) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain example embodiments, apparatus 20 may be a network node or RAN node, such as a base station, access point, Node B, eNB, gNB, WLAN access point, or the like. In another example embodiment, apparatus 20 may be an LFM. According to certain embodiments, apparatus 20 may be controlled by memory 24 and processor 22 to perform the functions associated with any of the embodiments described herein, such as the flow or signaling diagrams illustrated in FIGs. 1-6.

For instance, in one embodiment, apparatus 20 may be controlled by memory 24 and processor 22 to exchange packet data with a user equipment, and send the user equipment, a command for the user equipment to send a preamble message to a target base station and to listen for a random access response. Apparatus 20 may also be controlled by memory 24 and processor 22 to coordinate with the user equipment a time occasion for the user equipment to send the preamble message, and continue to exchange packet data with the user equipment while the user equipment listens for the random access response. Apparatus 20 may further be controlled by memory 24 and processor 22 to resume packet data exchange with the user equipment immediately after the preamble message is sent.

Apparatus 20 may also be controlled by memory 24 and processor 22 to receive the random access response from a target base station as a result of the user equipment sending the preamble message, and forward the random access response to the user equipment via a radio link of a source base station. Apparatus 20 may further be controlled by memory 24 and processor 22 to terminate transmission and reception to and from the user equipment after forwarding the random access response.

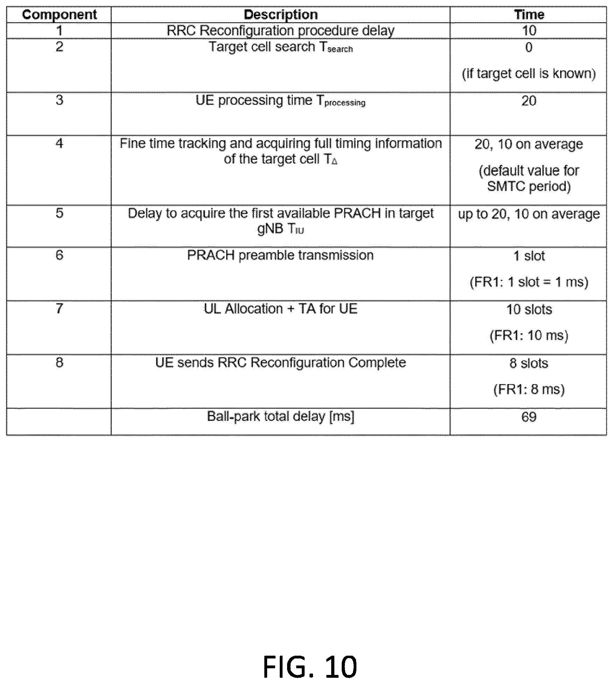

FIG. 10 illustrates a table of components of intra-frequency HO interruption in NR FR1. As illustrated in FIG. 10, the interruption time is about 69 ms. If make-before-break is applied, the HO interruption time may be reduced by RRC procedure delay (component 1), resulting in an interruption time of 59 ms. However, certain example embodiments provide several technical improvements, enhancements, and/or advantages over conventional technologies, methods, and systems for reducing interruption time. Various example embodiments may, for example, provide a system that reduces the interruption time even further by the time to receive RAR containing the UL grant and TA shown in component 7. That is, according to certain example embodiments, it may be possible to save an additional 10 ms interruption time accounting for (10/59)^{∗}100% = 17% of the total interruption time when compared to the make-before-break solution.

In addition, according to certain example embodiments, it may be possible to save the interruption time caused by waiting for a predefined time window X to expire without receiving RAR from the source cell. This is at least because, in this time period X, the UE may continue to exchange user data packets with the source cell while waiting for the RAR. In contrast to the conventional solution, the gain is even higher if the UE does not receive an RAR within a predefined time window X, and has to retransmit Msg1 at a later time.

In some example embodiments, the functionality of any of the methods, processes, signaling diagrams, algorithms or flow charts described herein may be implemented by software and/or computer program code or portions of code stored in memory or other computer readable or tangible media, and executed by a processor.

In some example embodiments, an apparatus may be included or be associated with at least one software application, module, unit or entity configured as arithmetic operation(s), or as a program or portions of it (including an added or updated software routine), executed by at least one operation processor. Programs, also called program products or computer programs, including software routines, applets and macros, may be stored in any apparatus-readable data storage medium and include program instructions to perform particular tasks.

A computer program product may comprise one or more computer-executable components which, when the program is run, are configured to carry out some of the various example embodiments described herein. The one or more computer-executable components may be at least one software code or portions of it. Modifications and configurations required for implementing functionality of an example embodiment may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus, for example through the use of an application specific integrated circuit (ASIC), a programmable gate array (PGA), a field programmable gate array (FPGA), or any other combination of hardware and software. In yet another example embodiment, the functionality may be implemented as a signal, a non-tangible means that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

One having ordinary skill in the art will readily understand that the example embodiments as discussed above may be practiced with steps in a different order, and/or with hardware elements in configurations which are different than those which are disclosed. Therefore, although some embodiments have been described based upon these example preferred embodiments, it would be apparent to those of skill in the art that certain modifications, variations, and alternative constructions would be apparent, while remaining within the scope of example embodiments. In order to determine the metes and bounds of the example embodiments, therefore, reference should be made to the appended claims.

A first embodiment is directed to a method. The method includes exchanging packet data with a source base station. The method also includes receiving, from the source base station, a command to send a preamble message to a target base station and to listen for a random access response from the source base station. In addition, the method includes continuing to exchange packet data with the source base station while listening for the random access response. Further, the method includes after receiving the command, temporarily detaching from the source base station and synchronizing with a target base station. In addition, the method includes sending the preamble message to the target base station according to a coordinated time occasion. Further, the method includes resuming packet data exchange with the source base station immediately after sending the preamble message.

The method further includes skipping any uplink transmission to the source base station when sending the preamble message.

In a variant, the method may also include receiving a random access response via only a radio link of the source base station.

In a variant, the method may further include detaching from the source base station after receiving the random access response, and executing handover to the target base station by sending a radio resource control reconfiguration complete message to the target base station.

In a variant, the radio resource control reconfiguration complete message may be sent to the target base station after receiving a handover resume message from the source base station, and the data packet exchange may continue with the source base station until the handover resume message is received.

In a variant, the method may further include temporarily detaching from the source base station after a predefined time that a random access response is not received from the source base station.

In a variant, the timing occasion may be when a user equipment is not scheduled for downlink or uplink in at least one random access channel occasion.

In a variant, the method may further include informing the source base station before sending the preamble message such that the source base station skips scheduling a user equipment in an upcoming random access channel occasion.

In a variant, the method may further include informing the source base station about random access channel occasions that may be considered for sending the preamble message.

In a variant, the method may include receiving an indication from the target base station of random access channel occasions in which a user equipment will monitor the random access response from the source base station.

In a variant, for subsequent random access channel occasions, the method may include monitoring the target base station for receiving the random access response.

In a variant, the method may include receiving an indication from the target base station of a time period in which a user equipment will monitor the random access response from the source base station.

In a variant, after the time period has elapsed, the method may further include monitoring the target base station for receiving the random access response.

A second embodiment is directed to a method. The method includes exchanging packet data with a user equipment. The method also includes sending the user equipment, a command for the user equipment to send a preamble message to a target base station and to listen for a random access response from a source base station's radio interface. The method further includes continuing to exchange packet data with the user equipment while the user equipment listens for the random access response. In addition, the method includes resuming packet data exchange with the user equipment immediately after the preamble message is sent.

In a variant, the method may further include receiving the random access response from a target base station, and forwarding the random access response to the user equipment via a radio link of a source base station.

In a variant, the method may also include terminating transmission and reception to and from the user equipment after forwarding the random access response.

The method further includes coordinating with the user equipment a time occasion for the user equipment to send the preamble message.

In a variant, the timing occasion may include receiving information from a target cell about random access channel occasions that the user equipment may use to send the preamble message.

In a variant, the timing occasion may include receiving information from the user equipment before the user equipment sends the preamble message to skip scheduling the user equipment for uplink or downlink in a next upcoming random access channel occasion.

Another non-claimed embodiment is directed to an apparatus including at least one processor and at least one memory including computer program code. The at least one memory and computer program code may be configured, with the at least one processor, to cause the apparatus at least to perform the method according to the first embodiment or the second embodiment, or any of their variants discussed above.

Another non-claimed embodiment is directed to an apparatus that may include circuitry configured to perform the method according to the first embodiment or the second embodiment, or any of their variants.

Another non-claimed embodiment is directed to an apparatus that may include means for performing the method according to the first embodiment or the second embodiment, or any of their variants.

Another non-claimed embodiment is directed to a computer readable medium including program instructions stored thereon for performing at least the method according to the first embodiment or the second embodiment, or any of their variants.

### Partial Glossary

- AMF: Access Management Function
- BS: Base Station
- CE: Control Element
- DL: Downlink
- eNB: Enhanced Node B
- gNB: 5g or NR Base Station
- HO: Handover
- LTE: Long Term Evolution
- MAC: Medium Access Control
- MBB: Make-before-break
- MME: Mobility Management Entity
- NR: New Radio
- PRACH: Physical Random Access Channel
- PUCCH: Physical Uplink Control Channel
- RACH: Random Access Channel
- RAR: Random Access Response
- TA: Timing Advance
- TRX: Transceiver
- UE: User Equipment
- UL: Uplink
- UPF: User Plane Function

## Claims

1. A method, comprising:
exchanging (700), by a user equipment (105), packet data with a source base station (110);
receiving (705), by the user equipment (105) from the source base station (110), a command to send a preamble message to a target base station (115) and to listen for a random access response from the source base station (110);
continuing (710) by the user equipment (105) to exchange packet data with the source base station (110) while listening for the random access response;
after receiving the command, temporarily detaching (715) by the user equipment (105) from the source base station (110) and synchronizing with a target base station (115);
sending (720) by the user equipment (105) the preamble message to the target base station (115) according to a coordinated time occasion between the user equipment (105) and the source base station (110), wherein the user equipment (105) skips (725) a scheduled uplink transmission to the source base station (110) when sending the preamble message; and
resuming (730) by the user equipment (105) packet data exchange with the source base station (110) immediately after sending the preamble message.

2. The method according to claim 1, further comprising receiving (735) by the user equipment (105), a random access response via a radio link of the source base (110).

3. The method according to any of claims 1-2, further comprising:
detaching (745) by the user equipment (105) from the source base station (110) after receiving the random access response; and
executing (750) handover by the user equipment (105) to the target base station (115) by sending a radio resource control reconfiguration complete message to the target base station (115).

4. The method according to claim 3,
wherein the radio resource control reconfiguration complete message is sent to the target base station (115) after receiving a handover resume message from the source base station (110), and
wherein data packet exchange continues by the user equipment (105) with the source base station (110) until the handover resume message is received.

5. The method according to any of claims 1-4, further comprising temporarily detaching (740) by the user equipment (105) from the source base station (110) after a predefined time that a random access response is not received from the source base station (110).

6. The method according to any of claims 1-5, wherein the user equipment (105) is not scheduled for downlink or uplink in at least one random access channel occasion.

7. The method according to any of claims 1-6, further comprising informing by the user equipment (105) the source base station (110) before sending the preamble message such that the source base station (110) skips scheduling the user equipment (105) in an upcoming random access channel occasion.

8. The method according to any of claims 1-7, further comprising informing by the user equipment (105) the source base station (110) about random access channel occasions that are considered for sending the preamble message.

9. The method according to any of claims 1-8, further comprising receiving by the user equipment (105) an indication from the target base station (115) of random access channel occasions in which the user equipment (105) will monitor the random access response from the source base station (110).

10. The method according to any of claims 1-9, wherein for subsequent random access channel occasions, the method further comprises monitoring the target base station (115) for receiving the random access response.

11. The method according to any of claims 1-10, further comprising receiving by the user equipment (105) an indication from the target base station (115) of a time period in which the user equipment (105) will monitor the random access response from the source base station (110).

12. A method, comprising:
exchanging (800) packet data by a source base station (110) with a user equipment (105);
sending (805) by the source base station (110) to the user equipment (105), a command for the user equipment (105) to send a preamble message to a target base station (115), according to a coordinated time occasion between the user equipment (105) and the source base station (110), wherein the user equipment (105) skips (725) a scheduled an uplink transmission to the source base station (110) when sending the preamble message and to listen for a random access response from the source base station's (110) radio interface;
continuing (815) by the source base station (110) to exchange packet data with the user equipment (105) while the user equipment (105) listens for the random access response; and
resuming (820) by the source base station (110) packet data exchange with the user equipment (105) immediately after the preamble message is sent.

13. A user equipment (10), comprising:
means for exchanging packet data with a source base station (110);
means for receiving, from the source base station (110), a command to send a preamble message to a target base station (115) and to listen for a random access response from the source base station (110);
means for continuing to exchange packet data with the source base station (110) while listening for the random access response;
means for, after receiving the command, temporarily detaching from the source base station (110) and synchronizing with a target base station (115);
means for sending the preamble message to the target base station (115) according to a coordinated time occasion between the apparatus (10) and the source base station (110), wherein the apparatus (10) comprises further means arranged to skip a scheduled an uplink transmission to the source base station (110) when sending the preamble message; and
means for resuming packet data exchange with the source base station (110) immediately after sending the preamble message.

14. A source base station (20), comprising:
means for exchanging packet data with a user equipment (105);
means for sending the user equipment (105), a command for the user equipment (105) to send a preamble message to a target base station (115) according to a coordinated time occasion between the user equipment (105) and the apparatus (20), wherein the user equipment (105) skips scheduling an uplink transmission to the apparatus (20) when sending the preamble message and to listen for a random access response from a source base station's (110) radio interface;
means for continuing to exchange packet data with the user equipment (105) while the user equipment (105) listens for the random access response; and
means for resuming packet data exchange with the user equipment (105) immediately after the preamble message is sent.

## Patentansprüche

1. Verfahren, umfassend:
Austauschen (700) von Paketdaten durch ein Endgerät (105) mit einer Quellen-Basisstation (110);
Empfangen (705) eines Befehls von der Quellen-Basisstation (110) durch das Endgerät (105), eine Präambel-Nachricht an eine Ziel-Basisstation (115) zu senden und auf eine Zufallszugriffsantwort von der Quellen-Basisstation (110) zu horchen;
Fortsetzen (710) des Paketdatenaustauschs durch das Endgerät (105) mit der Quellen-Basisstation (110), während es auf die Zufallszugriffsantwort horcht;
nach Empfangen des Befehls, vorübergehendes Loslösen (715) durch das Endgerät (105) von der Quellen-Basisstation (110) und Synchronisieren mit einer Ziel-Basisstation (115);
Senden (720) der Präambel-Nachricht durch das Endgerät (105) an die Ziel-Basisstation (115) gemäß einem koordinierten Zeitanlass zwischen dem Endgerät (105) und der Quellen-Basisstation (110), wobei das Endgerät (105) eine geplante Uplink-Übertragung an die Quellen-Basisstation (110) überspringt (725), wenn es die Präambel-Nachricht sendet; und
Wiederaufnehmen (730) des Paketdatenaustauschs durch das Endgerät (105) mit der Quellen-Basisstation (110) unmittelbar nach dem Senden der Präambel-Nachricht.

2. Verfahren nach Anspruch 1, ferner umfassend das Empfangen (735) einer Zufallszugriffsantwort durch das Endgerät (105) über eine Funkverbindung der Quellenbasis (110).

3. Verfahren nach einem der Ansprüche 1 bis 2, ferner umfassend:
Loslösen (745) durch das Endgerät (105) von der Quellen-Basisstation (110) nach dem Empfangen der Zufallszugriffsantwort; und
Ausführen (750) der Übergabe durch das Endgerät (105) an die Ziel-Basisstation (115) durch Senden einer Nachricht über die vollständige Rekonfiguration der Funkressourcensteuerung an die Ziel-Basisstation (115).

4. Verfahren nach Anspruch 3,
wobei die Nachricht über die vollständige Rekonfiguration der Funkressourcensteuerung an die Ziel-Basisstation (115) gesendet wird, nachdem eine Nachricht über die Wiederaufnahme der Übergabe von der Quellen-Basisstation (110) empfangen wurde, und
wobei der Austausch von Datenpaketen durch das Endgerät (105) mit der Quellen-Basisstation (110) fortgesetzt wird, bis die Nachricht über die Wiederaufnahme der Übergabe empfangen wird.

5. Verfahren nach einem der Ansprüche 1 bis 4, ferner umfassend das vorübergehende Loslösen (740) des Endgeräts (105) von der Quellen-Basisstation (110) nach einer vordefinierten Zeit, in der keine Zufallszugriffsantwort von der Quellen-Basisstation (110) empfangen wird.

6. Verfahren nach einem der Ansprüche 1 bis 5, wobei das Endgerät (105) in mindestens einem Zufallszugriffskanal-Anlass nicht für Downlink oder Uplink eingeplant wird.

7. Verfahren nach einem der Ansprüche 1 bis 6, ferner umfassend das Informieren der Quellen-Basisstation (110) durch das Endgerät (105) vor dem Senden der Präambel-Nachricht, so dass die Quellen-Basisstation (110) das Einplanen des Endgeräts (105) in einen bevorstehenden Zufallszugriffskanal-Anlass überspringt.

8. Verfahren nach einem der Ansprüche 1 bis 7, ferner umfassend das Informieren der Quellen-Basisstation (110) durch das Endgerät (105) über Zufallszugriffskanal-Anlässe, die für das Senden der Präambel-Nachricht in Betracht gezogen werden.

9. Verfahren nach einem der Ansprüche 1 bis 8, ferner umfassend das Empfangen, durch das Endgerät (105), eines Hinweises von der Ziel-Basisstation (115) auf Zufallszugriffskanal-Anlässe, in denen das Endgerät (105) die Zufallszugriffsantwort von der Quellen-Basisstation (110) überwachen wird.

10. Verfahren nach einem der Ansprüche 1 bis 9, wobei das Verfahren für nachfolgende Zufallszugriffskanal-Anlässe ferner das Überwachen der Ziel-Basisstation (115) auf den Empfang der Zufallszugriffsantwort umfasst.

11. Verfahren nach einem der Ansprüche 1 bis 10, ferner umfassend das Empfangen, durch das Endgerät (105), eines Hinweises von der Ziel-Basisstation (115) auf eine Zeitspanne, in der das Endgerät (105) die Zufallszugriffsantwort von der Quellen-Basisstation (110) überwacht.

12. Verfahren, umfassend:
Austauschen (800) von Paketdaten durch eine Quellen-Basisstation (110) mit einem Endgerät (105);
Senden (805) eines Befehls durch die Quellen-Basisstation (110) an das Endgerät (105), damit das Endgerät (105) eine Präambel-Nachricht an eine Ziel-Basisstation (115) gemäß einem koordinierten Zeitanlass zwischen dem Endgerät (105) und der Quellen-Basisstation (110) sendet, wobei das Endgerät (105) eine geplante Uplink-Übertragung an die Quellen-Basisstation (110) überspringt (725), wenn es die Präambel-Nachricht sendet und auf eine Zufallszugriffsantwort von der Funkschnittstelle der Quellen-Basisstation (110) horcht;
Fortsetzen (815) des Paketdatenaustauschs durch die Quellen-Basisstation (110) mit dem Endgerät (105), während das Endgerät (105) auf die Zufallszugriffsantwort horcht; und
Wiederaufnehmen (820) des Paketdatenaustauschs mit dem Endgerät (105) durch die Quellen-Basisstation (110) unmittelbar nach dem Senden der Präambel-Nachricht.

13. Endgerät (10), umfassend:
Mittel zum Austauschen von Datenpaketen mit einer Quellen-Basisstation (110);
Mittel zum Empfangen eines Befehls von der Quellen-Basisstation (110), eine Präambel-Nachricht an eine Ziel-Basisstation (115) zu senden und auf eine Zufallszugriffsantwort von der Quellen-Basisstation (110) zu horchen;
Mittel zum Fortsetzen des Paketdatenaustauschs mit der Quellen-Basisstation (110), während sie auf die Zufallszugriffsantwort horchen;
Mittel, um sich nach dem Empfangen des Befehls vorübergehend von der Quellen-Basisstation (110) loszulösen und mit einer Ziel-Basisstation (115) zu synchronisieren;
Mittel zum Senden der Präambel-Nachricht an die Ziel-Basisstation (115) gemäß einem koordinierten Zeitanlass zwischen der Einrichtung (10) und der Quellen-Basisstation (110), wobei die Einrichtung (10) ferner Mittel umfasst, die angeordnet sind, um eine geplante Uplink-Übertragung an die Quellen-Basisstation (110) zu überspringen, wenn die Präambel-Nachricht gesendet wird; und
Mittel zum Wiederaufnehmen des Paketdatenaustauschs mit der Quellen-Basisstation (110) unmittelbar nach dem Senden der Präambel-Nachricht.

14. Quellen-Basisstation (20), umfassend:
Mittel zum Austauschen von Paketdaten mit einem Endgerät (105);
Mittel zum Senden eines Befehls an das Endgerät (105), damit das Endgerät (105) eine Präambel-Nachricht an eine Ziel-Basisstation (115) gemäß einem koordinierten Zeitanlass zwischen dem Endgerät (105) und der Einrichtung (20) sendet, wobei das Endgerät (105) das Planen einer Uplink-Übertragung an die Einrichtung (20) überspringt, wenn es die Präambel-Nachricht sendet und auf eine Zufallszugriffsantwort von der Funkschnittstelle der Quellen-Basisstation (110) horcht;
Mittel zum Fortsetzen des Paketdatenaustauschs mit dem Endgerät (105), während das Endgerät (105) auf die Zufallszugriffsantwort horcht; und
Mittel zum Wiederaufnehmen des Paketdatenaustauschs mit dem Endgerät (105) unmittelbar nach dem Senden der Präambel-Nachricht.

## Revendications

1. Procédé, comprenant :
l'échange (700), par un équipement utilisateur (105), de données par paquets avec une station de base source (110) ;
la réception (705), par l'équipement utilisateur (105) en provenance de la station de base source (110), d'un ordre d'envoyer un message de préambule à une station de base cible (115) et d'écouter une réponse d'accès aléatoire provenant de la station de base source (110) ;
la poursuite (710), par l'équipement utilisateur (105), de l'échange de données par paquets avec la station de base source (110) tout en écoutant la réponse d'accès aléatoire ;
après la réception de l'ordre, le détachement (715), de manière temporaire, par l'équipement utilisateur (105), par rapport à la station de base source (110) et la synchronisation avec une station de base cible (115) ;
l'envoi (720), par l'équipement utilisateur (105), du message de préambule à la station de base cible (115) selon une occasion en temps coordonné entre l'équipement utilisateur (105) et la station de base source (110), dans lequel l'équipement utilisateur (105) ignore (725) une émission de liaison montante ordonnancée vers la station de base source (110) lors de l'envoi du message de préambule ; et
la reprise (730), par l'équipement utilisateur (105), de l'échange de données par paquets avec la station de base source (110) immédiatement après l'envoi du message de préambule.

2. Procédé selon la revendication 1, comprenant en outre la réception (735), par l'équipement utilisateur (105), d'une réponse d'accès aléatoire via une liaison radio de la base source (110) .

3. Procédé selon l'une quelconque des revendications 1 à 2, comprenant en outre :
le détachement (745), par l'équipement utilisateur (105), par rapport à la station de base source (110) après la réception de la réponse d'accès aléatoire ; et
l'exécution (750) d'un transfert intercellulaire par l'équipement utilisateur (105) vers la station de base cible (115) par l'envoi d'un message d'achèvement de reconfiguration de contrôle de ressource radio à la station de base cible (115).

4. Procédé selon la revendication 3,
dans lequel le message d'achèvement de reconfiguration de contrôle de ressource radio est envoyé à la station de base cible (115) après la réception d'un message de reprise de transfert intercellulaire provenant de la station de base source (110), et
dans lequel l'échange de données par paquets se poursuit par l'équipement utilisateur (105) avec la station de base source (110) jusqu'à ce que le message de reprise de transfert intercellulaire soit reçu.

5. Procédé selon l'une quelconque des revendications 1 à 4, comprenant en outre le détachement (740), de manière temporaire, par l'équipement utilisateur (105) par rapport à la station de base source (110) après un temps prédéfini pendant lequel une réponse d'accès aléatoire n'est pas reçue en provenance de la station de base source (110).

6. Procédé selon l'une quelconque des revendications 1 à 5, dans lequel l'équipement utilisateur (105) n'est pas ordonnancé pour une liaison descendante ou une liaison montante lors d'au moins une occasion de canal d'accès aléatoire.

7. Procédé selon l'une quelconque des revendications 1 à 6, comprenant en outre l'information, par l'équipement utilisateur (105), de la station de base source (110) avant l'envoi du message de préambule de sorte que la station de base source (110) ignore l'ordonnancement de l'équipement utilisateur (105) lors d'une occasion de canal d'accès aléatoire à venir.

8. Procédé selon l'une quelconque des revendications 1 à 7, comprenant en outre l'information, par l'équipement utilisateur (105), de la station de base source (110) à propos d'occasions de canal d'accès aléatoire qui sont envisagées pour l'envoi du message de préambule.

9. Procédé selon l'une quelconque des revendications 1 à 8, comprenant en outre la réception, par l'équipement utilisateur (105), d'une indication provenant de la station de base cible (115) d'occasions de canal d'accès aléatoire lors desquelles l'équipement utilisateur (105) surveillera la réponse d'accès aléatoire provenant de la station de base source (110).

10. Procédé selon l'une quelconque des revendications 1 à 9, dans lequel pour des occasions de canal d'accès aléatoire ultérieures, le procédé comprend en outre la surveillance de la station de base cible (115) pour la réception de la réponse d'accès aléatoire.

11. Procédé selon l'une quelconque des revendications 1 à 10, comprenant en outre la réception, par l'équipement utilisateur (105), d'une indication provenant de la station de base cible (115) d'une durée au cours de laquelle l'équipement utilisateur (105) surveillera la réponse d'accès aléatoire provenant de la station de base source (110).

12. Procédé, comprenant :
l'échange (800) de données par paquets par une station de base source (110) avec un équipement utilisateur (105) ;
l'envoi (805), par la station de base source (110) à l'équipement utilisateur (105), d'un ordre pour l'équipement utilisateur (105) d'envoyer un message de préambule à une station de base cible (115), selon une occasion en temps coordonné entre l'équipement utilisateur (105) et la station de base source (110), dans lequel l'équipement utilisateur (105) ignore (725) une émission de liaison montante ordonnancée vers la station de base source (110) lors de l'envoi du message de préambule, et d'écouter une réponse d'accès aléatoire provenant de l'interface radio de la station de base source (110) ;
la poursuite (815), par la station de base source (110), de l'échange de données par paquets avec l'équipement utilisateur (105) tandis que l'équipement utilisateur (105) écoute la réponse d'accès aléatoire ; et
la reprise (820), par la station de base source (110), de l'échange de données par paquets avec l'équipement utilisateur (105) immédiatement après que le message de préambule est envoyé.

13. Équipement utilisateur (10), comprenant :
un moyen d'échange de données par paquets avec une station de base source (110) ;
un moyen de réception, en provenance de la station de base source (110), d'un ordre d'envoyer un message de préambule à une station de base cible (115) et d'écouter une réponse d'accès aléatoire provenant de la station de base source (110) ;
un moyen de poursuite de l'échange de données par paquets avec la station de base source (110) tout en écoutant la réponse d'accès aléatoire ;
un moyen, après la réception de l'ordre, de détachement, de manière temporaire, par rapport à la station de base source (110) et de synchronisation avec une station de base cible (115) ;
un moyen d'envoi du message de préambule à la station de base cible (115) selon une occasion en temps coordonné entre l'appareil (10) et la station de base source (110), dans lequel l'appareil (10) comprend un moyen supplémentaire conçu pour ignorer une émission de liaison montante ordonnancée vers la station de base source (110) lors de l'envoi du message de préambule ; et
un moyen de reprise de l'échange de données par paquets avec la station de base source (110) immédiatement après l'envoi du message de préambule.

14. Station de base source (20), comprenant :
un moyen d'échange de données par paquets avec un équipement utilisateur (105) ;
un moyen d'envoi, à l'équipement utilisateur (105), d'un ordre pour l'équipement utilisateur (105) d'envoyer un message de préambule à une station de base cible (115) selon une occasion en temps coordonné entre l'équipement utilisateur (105) et l'appareil (20), dans lequel l'équipement utilisateur (105) ignore l'ordonnancement d'une émission de liaison montante vers l'appareil (20) lors de l'envoi du message de préambule, et d'écouter une réponse d'accès aléatoire provenant d'une interface radio de la station de base source (110) ;
un moyen de poursuite de l'échange de données par paquets avec l'équipement utilisateur (105) tandis que l'équipement utilisateur (105) écoute la réponse d'accès aléatoire ; et
un moyen de reprise de l'échange de données par paquets avec l'équipement utilisateur (105) immédiatement après que le message de préambule est envoyé.
